**Europäisches Patentamt**

**European Patent Office**

**Office européen des brevets**

(19)

(11) Veröffentlichungsnummer: **0 101 059**
A1

# (12) EUROPÄISCHE PATENTANMELDUNG

(21) Anmeldenummer: **83107877.9**

(22) Anmeldetag: **09.08.83**

(51) Int. Cl.$^3$: **A 01 M 29/02**

(30) Priorität: **11.08.82 DE 3229904**

(43) Veröffentlichungstag der Anmeldung:
**22.02.84** Patentblatt **84/8**

(84) Benannte Vertragsstaaten:
**AT BE CH DE FR GB IT LI LU NL SE**

(71) Anmelder: **B & M Lizenzgesellschaft mbH**
**Thomas-Knorr-Strasse 25**
**D-8100 Garmisch-Partenkirchen(DE)**

(72) Erfinder: **Brehm, Robert, Dr. h. c.**
**Thomas-Knorr-Strasse 25**
**D-8100 Garmisch-Partenkirchen(DE)**

(74) Vertreter: **Patentanwälte Dr. Solf & Zapf**
**c/o Patentanwälte Dr. Hasse Dr. Solf & Zapf**
**Asamstrasse 8**
**D-8000 München 90(DE)**

(54) **Vorrichtung zum Fernhalten von Tieren.**

(57) Die Erfindung betrifft eine Vorrichtung zum Fernhalten bzw. Vertreiben von Tieren durch die Anordnung eines Schwingungssystems zum Erzeugen von für menschliche Organe nicht wahrnehmbare Schallintensitäten, derart, daß angesprochene Tiere, je nach der Empfindlichkeit ihrer Sinnesorgane, diese mindestens als störend oder als schmerzhaft empfinden.

EP 0 101 059 A1

Croydon Printing Company Ltd.

0101059

B & M Lizenzgesellschaft mbH, Thomas-Knorr-
straße 25, 8100 Garmisch-Partenkirchen

Vorrichtung zum Fernhalten von Tieren

Die Erfindung betrifft eine Vorrichtung zum Fernhalten bzw.
Vertreiben von unerwünschten Tieren.

Vielfältig z.B. in der Agrarwirtschaft besteht das Bedürfnis, Saat, reifende Früchte und dgl. gegen Wildschäden und
Vogelfraß zu schützen. Aber auch im häuslichen Bereich wird
der Schutz gegen unerwünschte Tiere angestrebt; beispielsweise möchte man Ratten, Mäuse, Schaben, Insekten, zum Teil
Vögel (Tauben) vom Gebäudebereich fernhalten, um Schäden
zu unterbinden. So sind beispielsweise Geräte zum Vertreiben von Tieren bekannt, bei denen akustische und optische
Reize gleichzeitig angewandt werden. Oder man verwendet
Nachbildungen von Raubvögeln, um Vögel vom Niedersitzen
fernzuhalten. Schallschwingungen werden beispielsweise
dadurch erreicht, daß man mechanisch gegen Gehäuse
klopft beispielsweise mittels gesteuerter Elektromagnete.

Alle diese Gerätearten haben den Nachteil, daß sie auch
menschliche Sinnesorgane belästigen bzw. sind diese Geräte
bald unwirksam, weil die Tiere abgestumpft werden.

- 2 -

Aufgabe der Erfindung ist es, eine Abwehr für Tiere mit möglichst großer Reichweite (Schutzradius) zu schaffen, die für menschliche Sinnesorgane nicht bemerkbar (z.B. nicht hörbar), aber auch nicht schädigend sind, um angesprochene Schädlinge wie z.B. Ratten, Mäuse, aber auch fremde Haustiere usw. zu vertreiben.

Gelöst wird die gestellte Aufgabe durch die kennzeichnenden Merkmale von Anspruch 1 und die der Unteransprüche.

Durch die erfindungsgemäße Beschallung beispielsweise mittels Ultraschall aber auch durch andere einen Schalldruck erzeugenden Wellen werden die Tiere davon abgehalten, in diesem Bereich vorzudringen bzw. werden sie daraus vertrieben.

Im Nachfolgenden soll die Erfindung am Ultraschall erläutert werden, doch können auch andere Wellen beispielsweise Lichtwellen zur Anwendung gelangen; es kommt nur darauf an, daß bei entsprechenden Frequenzen z.B. der Schalldruck so hoch wird, daß die Tiere dies wenigstens als unangenehm empfinden. Verschiedene Tiere können Ultraschall hören, und zwar Hunde bis etwa 40 kHz, Fledermäuse bis über 150 kHz, Wühlmäuse bis 200 kHz usw.

0101059

Weitere Einzelheiten der Erfindung ergeben sich aus der Zeichnung und Beschreibung, und zwar zeigt (alles schematisch):

Fig. 1 eine in einem Gehäuse untergebrachte Vorrichtung,

Fig. 2 eine mögliche Schaltart und

Fig. 3 eine Anordnung der Bauelemente einer erfindungsgemäßen Vorrichtung sowie deren Verdrahtung.

Die Vorrichtung 1 besteht vorzugsweise aus Kunststoff und ist mit Schallaustrittsöffnungen 2 versehen, die im Bereich des Ausstrahlbereiches liegen. Die Ultraschallstrahler sind nach bekannten Prinzipien aufgebaut.

Zweckmäßig außen am Gehäuse ist eine Schalteinrichtung vorgesehen, bestehend aus einem drehbaren Schalter 12 und einem Skalenfeld 13. Die einzelnen Beschriftungen haben eine bestimmte Bedeutung. So kann I bedeuten, daß in dieser Stellung solche Ultraschallwellen erzeugt werden, die Ratten als besonders unangenehm empfinden; die Stellung II zeigt an, daß dies für Mäuse der Fall ist; die Stellung III ist günstig zur Abwehr von Katzen usw.

Je näher die Frequenz abgestrahlter Ultraschallwellen an die Resonanzfrequenz eines Sinnesorganes oder an die Schädelresonanzfrequenz herankommt, umso unangenehmer empfindet dies das jeweilige Tier; die Reizung kann soweit gehen, daß das Tier dies als schmerzhaft empfindet. Dabei kann bei stärkerer Intensität sogar eine Dauerschädigung des Tieres bzw. dessen Tod verursacht werden.

Damit die Tiere sich nicht an eine bestimmte Frequenz gewöhnen und dagegen immun werden, ist es zweckmäßig, die Intensität des Ultraschallsenders möglichst oft zwischen einem hohen und einem niedrigen Wert zu ändern. Aus diesemGrunde sollte man vorzugsweise mehrere Ultraschallresonatoren (s. nachfolgend) verwenden, wobei deren voneinander verschiedene Resonanzfrequenzen auch stark variieren sollten. So kann man in rascher zyklischer Folge Frequenzwechsel stattfinden lassen, beispielsweise – je nach Tierart – zwischen 18, 22 und 26 kHz. Auf die Gehörorgane des Tieres wirken diese Frequenzwechsel wie kurze kräftige Schallstöße und zwingen das Tier zum Abdrehen. Es können auch Ultraschallresonatoren gegeneinander versetzt vorgesehen sein und man kann parallele Ultraschallbündel oder divergierende Schallbündel erzeugen.

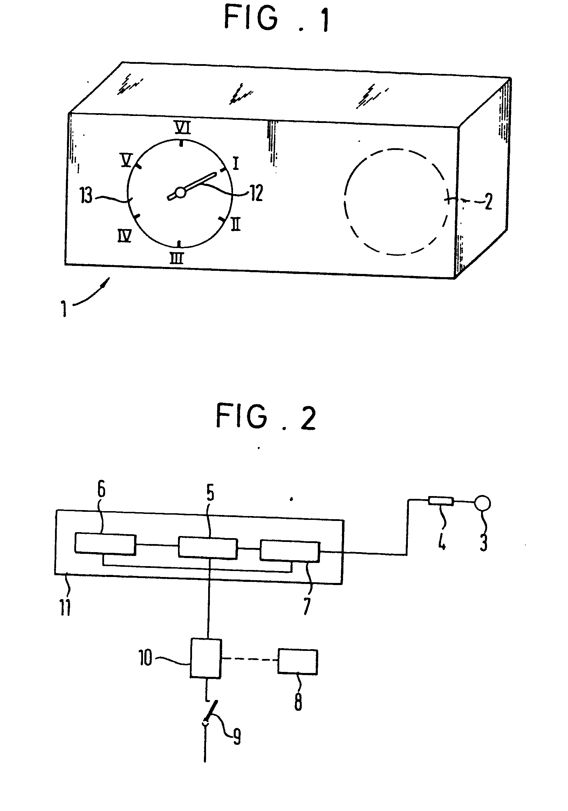

Schematisch ist in Fig. 2 eine Schaltanordnung dargestellt. Der Ultraschallresonator 3 könnte auch drehbar und/oder höhenverstellbar vorgesehen sein. Wie vorbeschrieben, kann man eine Mehrzahl solcher Ultraschallresonatoren anbringen, wobei die Frequenz unterschiedlich groß gewählt wird.
Vorgeschaltet ist ein Widerstand 4.

Das Netzgerät 10 beginnt zu arbeiten, sobald der Schalter
9 eingeschaltet ist. Zusätzlich zum Schalter 9 oder nur
könnte man auch einen Dämmerungsschalter 8 vorsehen.

In der Schaltfolge sind untergebracht ein Oszillator 6.
Auch hier wählt man zweckmäßig mehrere Oszillatoren.
Dann folgt zweckmäßig wenigstens ein Modulator 5 und
nachfolgend ein Endverstärker 7.

Durch die Anordnung mehrerer Ultraschallresonatoren 3
mit entsprechend vielen und unterschiedlichen Resonanzfrequenzen (z.B. 16, 18, 20 kHz) und entsprechenden Anpassungswiderständen 4 könnte für diese Anordnung das Gehäuse 11 einen entsprechend ausgelegten Wobbelsender enthalten, also entsprechend viele Oszillatoren 6.

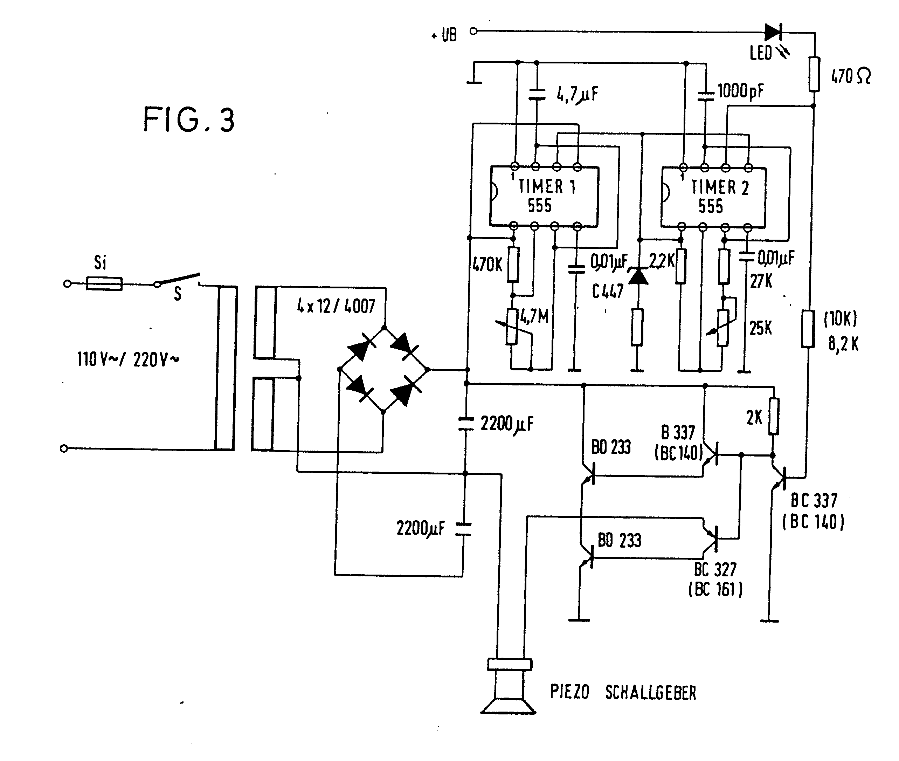

Die Funktion des zur Abwehr einsetzbaren Gerätes besteht
darin, daß gemäß Fig. 3 eine mit Gleichspannung versorgte
elektronische Schaltung Frequenzen im Bereich von 12 bis
25 kHz erzeugt.

Diese im Ultraschallbereich liegenden Frequenzen (Rechteckspannung) werden mittels eines elektronischen Taktgebers
erzeugt (Timer) und über eine Treiberstufe mit anschließender Gegentakt-Endstufe auf den Piezo-Schallwandler gebracht
und abgestrahlt.

Das durch ein Potentiometer im Frequenzbereich regelbare
Ausgangssignal wird in einem bestimmten Rhythmus (Takt)
unterbrochen. Dies erfolgt ebenfalls mittels eines Taktgebers (Timer), der von der Funktion her als A-Stabiler
Multivibrator betrachtet werden kann.

Der Aktionsradius des Gerätes beträgt bei unverbauter
Fläche ca. 250 m$^2$. Die Montage sollte in etwa zwei Meter
Höhe bei einem Neinungswinkel von 45$^\circ$ erfolgen.

0101059

- 7 -

P a t e n t a n s p r ü c h e

1. Vorrichtung zum Fernhalten bzw. Vertreiben von Tieren, gekennzeichnet durch die Anordnung eines Schwingungssystems zum Erzeugen von für menschliche Organe nicht wahrnehmbare Schallintensitäten, derart, daß angesprochene Tiere, je nach der Empfindlichkeit ihrer Sinnesorgane, diese mindestens als störend oder als schmerzhaft empfinden.

2. Vorrichtung nach Anspruch 1, dadurch gekennzeichnet, daß der Schall mit Frequenzen vorzugsweise oberhalb der menschlichen Hörgrenze so auf die jeweils angesprochene Tierart abgestimmt ist, daß er möglichst nahe an die Resonanzfrequenz wenigstens eines der Sinnesorgane und/oder des Schädels der Tiere herankommt.

3. Vorrichtung nach wenigstens einem der vorherigen Ansprüche,

dadurch gekennzeichnet, daß die Frequenzen im einem bestimmten, vorzugsweise einstellbaren Bereich variierbar sind.

4. Vorrichtung nach wenigstens einem der vorherigen Ansprüche,

dadurch gekennzeichnet, daß die Vorrichtung wasserdicht ausgeführt ist.

5. Vorrichtung nach wenigstens einem der vorherigen Ansprüche,

dadurch gekennzeichnet, daß die Schallintensität einstellbar ist.

6. Vorrichtung nach wenigstens einem der vorherigen Ansprüche,

gekennzeichnet durch die Anwendung von magnetostriktiven und piezoelektrischen Schwingern.

7. Vorrichtung nach wenigstens einem der vorherigen Ansprüche,

dadurch gekennzeichnet, daß die Resonatoren mit Resonanzfrequenzen im Bereich um 14 bis 22 kHz arbeiten.

8. Vorrichtung nach wenigstens einem der vorherigen Ansprüche,

gekennzeichnet durch die Anwendung von Wobbelfrequenzen im Bereich z.B. um 80 bis 200 kHz.

9. Vorrichtung nach wenigstens einem der vorherigen Ansprüche,

gekennzeichnet durch die Anordnung von mindestens zwei Resonatoren z.B. Ultraschallresonatoren, bei denen die Resonanzfrequenz in einem bestimmten Grenzbereich - z.B. zwischen 0,3 kHz bis 5 kHz - zu- oder abnimmt.

10. Vorrichtung insbesondere nach Anspruch 1, gekennzeichnet durch eine Schalteinrichtung (12, 13) zum Einstellen auf eine erwünschte Frequenz, die für eine bestimmte Tierart ausgelegt ist.

0101059

1/2

FIG . 1

FIG . 2

FIG. 3

PIEZO SCHALLGEBER

**0101059**

# EUROPÄISCHER RECHERCHENBERICHT

Nummer der Anmeldung

EP 83 10 7877

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 037 109 (J.A. HIRS)<br><br>* Seite 1, Absatz 3 - Seite 2, Absatz 2; Seite 7, Absatz 3 * | 1-3,7-10 | A 01 M 29/02 |
| X | US-A-3 879 702 (J.G. MANCONE)<br><br>* Spalte 1, Zeile 36 - Spalte 3, Zeile 61; Figur 3 * | 1-3,6-7 | |
| X | FR-A-2 445 692 (G. BADENS)<br><br>* Insgesamt * | 1-3,6-7 | |
| X | DE-A-1 447 331 (F.H. PEAVEY & COMP.)<br>* Seite 2, Absatz 2 - Seite 4, Absatz 4 * | 1-3,5, 7,9,10 | |
| X | DE-A-2 022 056 (DELROSS ELECTRONIC CORP.)<br>* Ansprüche 1-7; Figur * | 1-3,5, 7-10 | RECHERCHIERTE SACHGEBIETE (Int. Cl. ³)<br><br>A 01 M |
| X | CH-A- 522 357 (M. WINKLER)<br>* Spalte 1, Zeile 1 - Spalte 2, Zeile 40; Figuren 1-7 * | 1-7,10 | |

Der vorliegende Recherchenbericht wurde für alle Patentansprüche erstellt.

| Recherchenort | Abschlußdatum der Recherche | Prüfer |
|---|---|---|
| DEN HAAG | 16-11-1983 | NEHRDICH H.J |

EPA Form 1503 03.82